# EUROPÄISCHE PATENTSCHRIFT

(11) **EP 2 026 947 B1**
(45) Veröffentlichungstag und Bekanntmachung des Hinweises auf die Patenterteilung: **29.07.2015**
(21) Anmeldenummer: 07725449.8
(22) Anmeldetag: 23.05.2007
(51) Int. Cl.: B29C 49/00, B29C 51/00, B29C 69/00, B29C 47/14, B29C 49/04, B29C 49/20, B29C 51/12

(54) **VERFAHREN ZUR HERSTELLUNG VON HOHLKÖRPERN AUS THERMOPLASTISCHEM KUNSTSTOFF DURCH EXTRUSIONSBLASFORMEN MIT KONTINUIERLICHER DÜSENSPALTVERSTELLUNG**
METHOD FOR PRODUCING HOLLOW BODIES FROM THERMOPLASTIC MATERIAL BY EXTRUSION BLOW MOULDING WITH CONTINUOUS DIE GAP ADJUSTMENT
PROCÉDÉ DE FABRICATION DE CORPS CREUX À PARTIR DE MATIÈRE THERMOPLASTIQUE PAR MOULAGE PAR EXTRUSION-SOUFFLAGE AVEC AJUSTEMENT CONTINU DE L'OUVERTURE DES BUSES

(30) Priorität: 09.06.2006 DE 102006027254
(43) Veröffentlichungstag der Anmeldung: 25.02.2009
(73) Patentinhaber: Kautex Textron GmbH & Co. KG, 53229 Bonn (DE)
(72) Erfinder: BORCHERT, Matthias, 53179 Bonn (DE); EULITZ, Dirk, 53115 Bonn (DE); WOLTER, Gerd, 53693 Königswinter (DE); KRÄMER, Timo, 57635 Hirz-Maulsbach (DE); LORENZ, Harald, 53474 Bad Neuenahr-Ahrweiler (DE); ECKHARDT, Joachim, 53229 Bonn (DE); FROITZHEIM, Thomas, 53757 St. Augustin (DE)
(74) Vertreter: Kierdorf Ritschel
(86) Internationale Anmeldenummer: PCT/EP2007/004549
(87) Internationale Veröffentlichungsnummer: WO 2007/140880

(56) Entgegenhaltungen:
- EP-A1- 1 334 817
- AT-B- 225 919
- DE-A1- 1 479 242
- DE-A1- 10 231 866
- DE-B1- 1 779 463
- FR-A- 1 166 775
- GB-A- 1 410 215
- JP-A- 5 229 015
- JP-A- 2006 068 930
- US-A- 3 912 436

## Beschreibung

Die Erfindung betrifft ein Verfahren zur Herstellung von Hohlkörpern aus thermoplastischem Kunststoff durch Extrusionsblasformen.

Es ist grundsätzlich bekannt, Hohlkörper wie beispielsweise Kraftstoffbehälter, Fässer oder Heizöltanks aus Kunststoff durch Extrusionsblasformen herzustellen.

Dabei wird im Allgemeinen granulierter thermoplastischer Kunststoff in einem oder mehreren Extrudern plastifiziert und einem Extrusionskopf zugeführt. Aus dem Extrusionskopf wird das plastifzierte Material in Form eines schlauchförmigen Vorformlings ausgestoßen, der entweder am Extrusionskopf abgenommen wird und mittels Manipulator in ein geöffnetes Formwerkzeug eingelegt wird oder direkt am Extrusionskopf hängend in das Formwerkzeug extrudiert wird. Das Formwerkzeug besteht im Allgemeinen aus zwei Formhälften, die ein Formnest bilden, welches die Außenkontur des fertigen blasgeformten Artikels definiert. Innerhalb des Formnestes wird der Vorformling mittels Gasdruck und/oder mittels Unterdruck aufgeweitet. Der fertige Artikel hat eine Außenkontur, die der durch das Formnest des Werkzeugs vorgegebenen Kontur entspricht.

Ebenso ist es bekannt, einen schlauchförmigen Vorformling nach Extrusion auf die vorgesehene Endlänge in eine oder mehrere Materialbahnen aufzuteilen und diese Materialbahnen mittels eines Greifers zwischen die geöffneten Hälften eines Werkzeugs zu transportieren.

Schließlich ist es auch bekannt, bahnförmige oder bänderförmige Vorformlinge aus Extrudern mit Breitschlitzdüsen auszustoßen und diese in irgendeiner Weise in der ersten oder zweiten Hitze in die endgültige Gestalt des fertigen Erzeugnisses umzuformen.

Bei Artikeln mit verhältnismäßig komplizierter Außenkontur wird in der Regel ein schlauchförmiger Vorformling extrudiert. Das am Extrusionskopf hängend extrudierte Material erfährt dabei eine gewisse Dehnung aufgrund seines längenbezogenen Gewichtes. Wenn keine Maßnahmen zum Ausgleich dieser Dehnung getroffen werden, resultiert hieraus eine unterschiedliche Wanddickenverteilung am fertigen Erzeugnis in Extrusionsrichtung. Dem kann man bei verhältnismäßig niedrig viskosem Schmelzen durch diskontinuierliche Extrusion entgegenwirken.

Es ist leicht vorstellbar, dass Artikel mit verhältnismäßig komplexer Außengestalt innerhalb der Blasform an verschiedenen Stellen unterschiedliche Dehnung beim Aufweiten erfahren, sodass alleine hieraus eine unterschiedliche Wanddickenverteilung resultiert. Bei der Herstellung bestimmter Erzeugnisse sind unterschiedliche Wanddicken am fertigen Erzeugnis wünschenswert, andere Erzeugnisse hingegen benötigen unterschiedliche Wanddickenprofile, aus Stabilitätsgründen beim fertigen Erzeugnis. Schließlich ist bekannt, die Wanddicke des extrudierten Vorformlings so zu variieren, dass unterschiedliche Dehnungen beim Aufweiten des Vorformlings kompensiert werden. Kritische Artikel sind insoweit klarsichtige Detergenzienbehälter, Kanister mit eingeformten Griffen etc.

Hierzu ist es bekannt, schlauchförmigen Vorformlingen ein Wanddickenprofil aufzugeben, und zwar sowohl axial als auch radial. Dies wird beispielsweise durch Verstellung des Ringspalts am Extrusionskopf bewerkstelligt. Bei sehr großen Erzeugnissen wird die Wanddickensteuerung auch dazu benutzt, die Längendehnung des Schlauchs bei der Extrusion zu kompensieren.

Auch bei größeren Erzeugnissen, wie beispielsweise bei Kraftstoffbehältern aus Kunststoff, ist es wünschenswert, den Vorformling eine über Länge und/oder Umfang desselben variierende Wanddicke aufzugeben, sodass unterschiedliche Dehnungen im Werkzeug kompensiert werden können oder eine unterschiedliche Wanddickenverteilung am fertigen Erzeugnis erzielt werden kann. Es ist beispielsweise denkbar, dass bei einem Kraftstoffbehälter eine unterschiedliche Wanddickenverteilung aus Stabilitätsgründen vorzusehen ist, um etwaige aufprallbedingte Verformungen besser aufnehmen zu können.
Die AT 225 919 B offenbart ein Verfahren gemäss dem Obergegriff des Anspruchs 1 und eine Vorrichtung zum Formblasen von Hohlkörpern aus mindestens zwei Profilbändern. Die Profilbänder treten aus zwei über einer in ihrer Mittelebene geteilten Hohlform angeordnete Strangpressen vertikal nach unten aus und sind mittels eines durch eine Düse zwischen die Bänder eingeführten Druckmittels in der Form verformbar. Für jedes Profilband ist eine eigene Strangpresse vorgesehen. Durch die Verwendung getrennter Strangpressen für jedes der in die Form eingebrachten Profilbänder ist es möglich, verschiedene Bänder mit beispielsweise unterschiedlichen Farben und/oder unterschiedliche Dicken zu verwenden. Der Düsenschlitz der Vorrichtung ist statisch, d.h. vor und/oder nach einer Extrusion veränderbar.
Die DE 14 79 242 A1 offenbart ein Extrusionswerkzeug mit einem über eine Leitung mit einem thermoplastischen Kunststoff beschickten Doppelmundstück mit zwei Austrittskanälen. An der Unterseite des Doppelmundstücks sind zwei äußere Mundstücklippen angeordnet, zwischen denen eine zentrische Mundstücklippe angeordnet ist. Die äußeren Mundstücklippen sind jeweils über Einstellmuttern und Einstellbolzen an dem Doppelmundstück-Gehäuse befestigt. Mittels der Einstellmuttern/Einstellbolzen kann vor und nach einem Extrusionsvorgang die Position der äußeren Mundstücklippen angepasst werden, so dass die jeweiligen Kanalausgänge des Doppelmundstücks über ihre Länge weitenveränderbar sind.

Der Erfindung liegt daher die Aufgabe zugrunde, ein Verfahren zur Herstellung eines extrusionsblasgeformten Behälters aus thermoplastischem Kunststoff bereitzustellen, mit welchem weitestgehende Freiheit bei der Variation der Wandstärke des Behälters in jede Richtung besteht.

Die Aufgabe wird gelöst mit einem Verfahren zur Herstellung von Hohlkörpern aus thermoplastischem Kunststoff durch Extrusionsblasformen, bei welchem eine Extrusion von wenigstens zwei bahnförmigen Vorformlingen aus plastifiziertem Kunststoff mittels mehrerer Extrusionseinrichtungen erfolgt, wobei die Vorformlinge in der ersten Hitze, d. h. in noch plastischem Zustand, innerhalb eines mehrteiligen, ein Formnest bildenden Werkzeugs gemeinsam zu einem Hohlkörper umgeformt werden und wobei wenigstens einem Vorformling während der Extrusion unabhängig von dem jeweils anderen Vorformling durch kontinuierliche Düsenspaltverstellung während der Extrusion ein Wanddickenprofil aufgegeben wird.

Vorzugsweise werden wenigstens zwei bahnförmige Vorformlinge kontinuierlich extrudiert. Wenn der zu fertigende Hohlkörper beispielsweise ein Kraftstoffbehälter ist, kann es vorteilhaft sein, die Vorformlinge aus einem mehrschichtigen Coextrudat mit Barriereschichten für Kohlenwasserstoffe, beispielsweise in Form von EVOH oder dergleichen bereitzustellen.

Im Gegensatz zu den bisher bekannten Verfahren zur Wanddickensteuerung bei schlauchförmigen Vorformlingen ist es mit dem erfindungsgemäßen Verfahren möglich, einen Hohlkörper mit zwei Bereichen mit jeweils unterschiedlichen Wanddickenprofilen zu erzeugen. Bei Extrusion eines schlauchförmigen Hohlkörpers hat eine radiale und/oder axiale Wanddickenverstellung eine Beeinflussung des gesamten Extrudats über dessen gesamten Umfang zur Folge. Bei dem erfindungsgemäßen Verfahren sind zwei jeweils einen Hohlkörper bildende Vorformlinge unabhängig voneinander beeinflussbar, wobei wenigstens einem Vorformling während der Extrusion ein von dem jeweils anderen Vorformling verschiedenes Wanddickenprofil aufgegeben werden kann. Dies hat den Vorzug, dass mit dem erfindungsgemäßen Verfahren auch große und komplexe Erzeugnisse mit einer beliebigen Wanddickevariation in jede Richtung herstellbar sind.

Zweckmäßigerweise erfolgt die Wanddickensteuerung jeweils nach einem vorgegebenen Programm.

Bei einer bevorzugten Variante des Verfahrens ist vorgesehen, dass den Vorformlingen, bzw. wenigstens einem Vorformling, ein Wanddickenprofil in Extrusionsrichtung und/oder quer zur Extrusionsrichtung aufgegeben wird.

Die Vorformlinge werden zweckmäßigerweise innerhalb des Werkzeugs durch inneren Überdruck und/oder äußeren Unterdruck aufgeweitet.

Die Umformung erfolgt bevorzugt innerhalb eines dreiteiligen Werkzeugs zweistufig, wobei in einem ersten Schritt die Vorformlinge jeweils gegen eine einen Teil des Formnestes bildende Kontur mittels Überdruck und/oder Unterdruck angelegt und ausgeformt werden und in einem zweiten Schritt die jeweils Teile des Hohlkörpers bildenden Zwischenerzeugnisse miteinander zu dem fertigen Erzeugnis verbunden werden.

Vorzugsweise werden die Vorformlinge aus parallel zueinander angeordneten Extrusioneinrichtungen mit Breitschlitzdüsen hängend (in Schwerkraftrichtung) extrudiert.

Die Extrusion der Vorformlinge erfolgt bevorzugt hinsichtlich der Extrusionsgeschwindigkeit synchron. Dabei kann die Variation der Wanddicke der Vorformlinge in Abhängigkeit des zeitlichen Verlaufs des Extrusionsvorgangs erfolgen.

Besonders bevorzugt werden die Vorformlinge zwischen die geöffneten Teile des Werkzeugs extrudiert, das um die Vorformlinge geschlossen wird und unter den Extrusionseinrichtungen wegbewegt wird.

Alternativ können beispielsweise die bahnförmigen Vorformlinge jeweils mittels eines Greifers an der betreffenden Extrusionseinrichtung abgenommen und zum Werkzeug transportiert werden.

Erfindungsgemäß ist vorgesehen, dass die Vorformlinge jeweils zwischen eine Außenform und eine Mittelform extrudiert werden, dass anschließend die Außenformen gegen die Mittelform geschlossen werden, die Vorformlinge jeweils gegen die Innenkontur der Außenformen angelegt werden, die Mittelform zwischen den Außenformen entfernt wird und die Außenformen gegeneinander geschlossen werden, um die in diesen befindlichen Zwischenerzeugnisse miteinander zu verbinden.

Obwohl das vorstehend beschriebene Verfahren als Extrusionblasformen bezeichnet ist, ist das Verfahren so zu verstehen, dass eine Anlegung der Vorformlinge an die Innenkontur des Formnestes auch mittels Unterdruck erfolgen kann. Hierzu ist es bekannt, im Formnest an der Innenkontur des Werkzeugs entsprechende Vakuumkanäle vorzusehen.

Die Vorformlinge können selbstverständlich ein- oder mehrschichtig extrudiert werden, wobei beispielsweise bei der Herstellung von Kraftstoffbehältern üblicherweise sechsschichtige Extrudate Anwendung finden, die jeweils Barriereschichten für Kohlenwasserstoffe enthalten.

Die Erfindung wird nachstehend anhand eines in den Zeichnungen dargestellten Ausführungsbeispiels erläutert.

Es zeigen:
- Figur 1: eine schematische Seitenansicht einer Extrusionsblaseinrichtung zur Durchführung des Verfahrens gemäß der Erfindung,

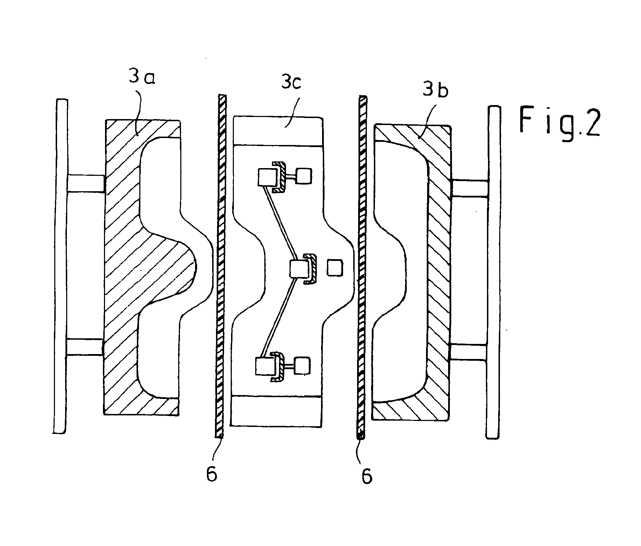

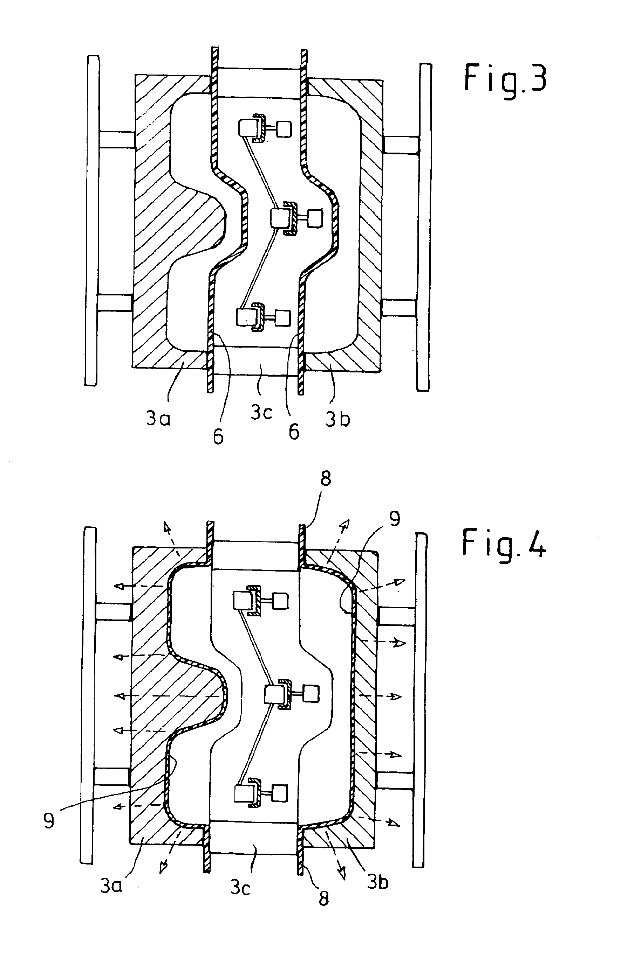

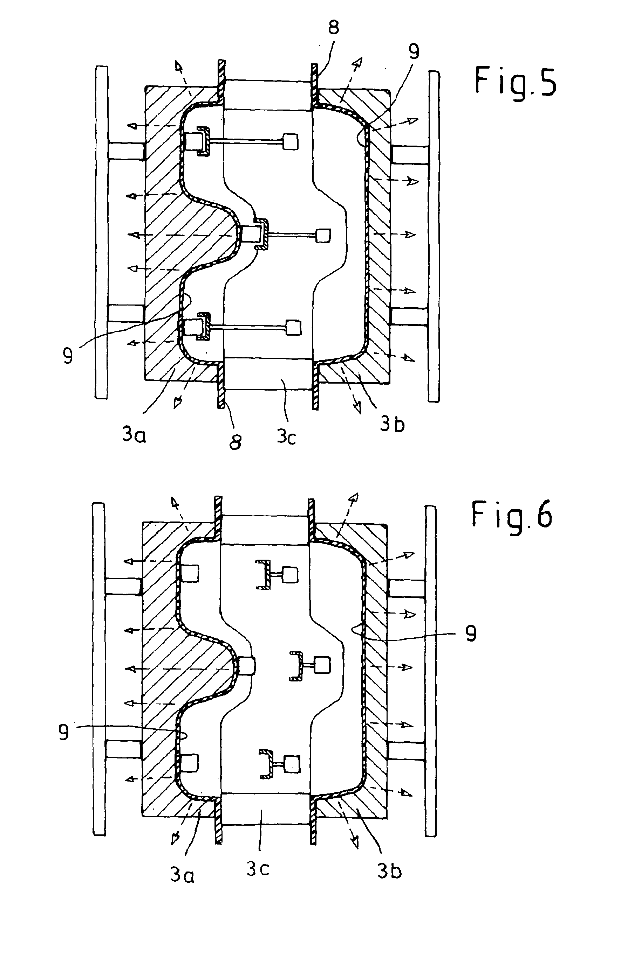

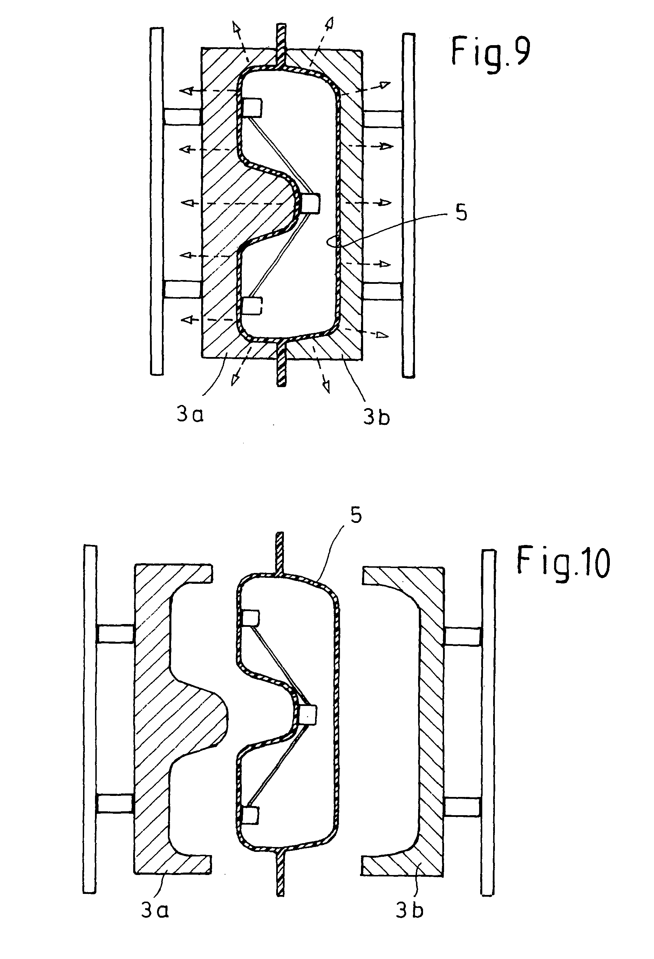

- Figuren 2-10: Querschnitte durch das Werkzeug der in Figur 1 gezeigten Vorrichtung bei verschiedenen Schritten des Verfahrens gemäß der Erfindung,
- Figuren 11a-11c: jeweils Ansichten der Düse des Extrusionskopfs, teilweise im Schnitt einer ersten Variante der Düsenspaltverstellung und
- Figuren 12a-12c: Ansichten einer Düse, teilweise im Schnitt, mit einer zweiten Variante der Düsenspaltverstellung

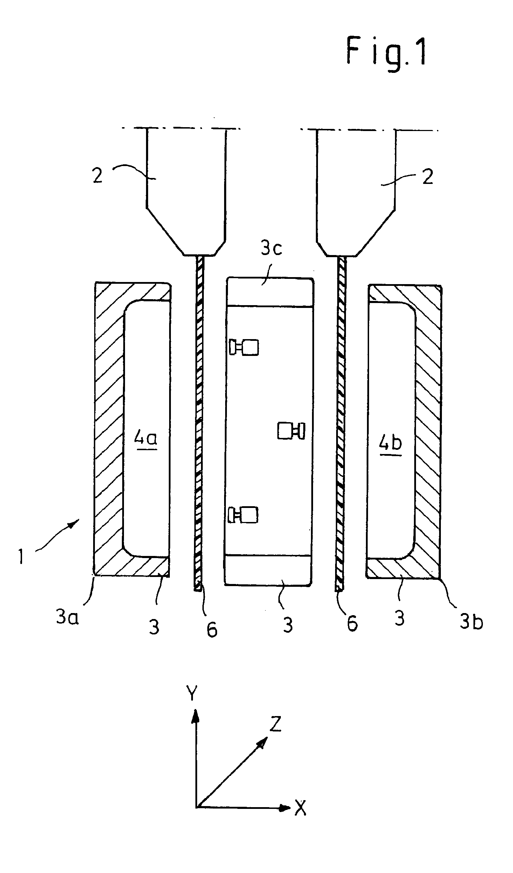

Die in Figur 1 dargestellte Extrusionsblasformmaschine 1 umfasst zwei Extrusionsköpfe 2 mit jeweils zugehörigen Extrudern, die nicht dargestellt sind. Die Extrusionsköpfe 2 sind oberhalb eines sowohl in die Zeichnungsebene hinein als auch aus dieser heraus verfahrbaren dreiteiligen Werkzeugs 3 angeordnet. Das Werkzeug 3 umfasst zwei Außenformen 3a, 3b und eine Mittelform 3c, wobei die Außenformen 3a, 3b jeweils eine Kavität 4a, 4b aufweisen, welche die spätere Außenkontur des fertigen Erzeugnisses 5 definieren.

Aus jedem Extrusionskopf 2 wird hängend ein bahnförmiger Vorformling 6 aus thermoplastischem Material extrudiert. Die Vorformlinge werden bei dem beschriebenen Ausführungsbeispiel der Erfindung zwischen die jeweils geöffneten Außenformen 3a, 3b und die Mittelform 3c extrudiert, die in Figur 1 in geöffneter Stellung dargestellt sind. Wie dies nachstehend schematisch dargestellt ist, sind die Außenformen 3a, 3b zueinander und bezüglich der Mittelform 3c mit hydraulischen Antrieben innerhalb nicht dargestellter Schließgestelle verfahrbar. Diese Einzelheiten sind bekannt und aus diesem Grund hier nicht dargestellt.

Die gesamte Anordnung bestehend aus den Außenformen 3a, 3b und der Mittelform 3c lässt sich in die Zeichnungsebene hinein und aus dieser heraus relativ zu dem Extrusionsköpfen 2 verfahren. Darüber hinaus lässt sich die Mittelform 3c bezüglich der Außenformen 3a, 3b ebenfalls in die Zeichnungsebene hinein und aus dieser heraus verfahren.

Der Einfachheit halber wird diese Bewegungsrichtung in die Zeichnungsebene hinein und aus dieser heraus nachstehend als Z-Richtung bezeichnet.

Die Richtung der Schließ- und Öffnungsbewegung der Außenformen 3a, 3b wird nachstehend als X-Richtung bezeichnet, die Extrusionsrichtung als Y-Richtung.

Der Herstellungszyklus beginnt in der in Figur 1 dargestellten Lage des Werkzeugs 3 unterhalb des Extrusionskopfs 2. Jeder Vorformling 6 wird, wie dies vorstehend bereits erwähnt wurde, jeweils zwischen einer Außenform 3a, 3b und der Mittelform 3c extrudiert. Hat der Vorformling 5 seine volle Länge erreicht, wie dies ebenfalls aus Figur 1 ersichtlich ist, werden die Außenformen 3a, 3b in X-Richtung aufeinander zugefahren, sodass diese den Vorformling gegen die Mittelform 3c einklemmen.

Da die Vorformlinge 6 kontinuierlich extrudiert werden, wird sodann das gesamte geschlossene Werkzeug 3 in Z-Richtung unter den Extrusionsköpfen 2 weggefahren, vornehmlich um den Austritt des nachfolgenden Extrudats nicht zu behindern. Gleichzeitig oder danach wird in dem Formnest 7 ein innerer Überdruck erzeugt, beispielsweise durch Einbringen von Druckluft oder eines anderen geeigneten Gases. Unterstützend oder alternativ können die Vorformlinge 6 mittels Unterdruck an die Innenkontur der Kavitäten 4a, 4b angelegt werden. Die jeweilige Kavität 4a, 4b entspricht der Außenkontur des Erzeugnisses 5 in diesem Bereich.

In der Mittelform 3c sind zum Zwecke des Positionierens von Einbauten in das Erzeugnis 5 ausfahrbare Bauteilhalter vorgesehen, auf die nachstehend nicht näher eingegangen wird. Mit diesen Bauteilhaltern lassen sich Einbauten an der Innenwandung des Erzeugnisses 5 befestigen. Bei einem Kraftstoffbehälter als Erzeugnis 5 können dies beispielsweise Ventilaufnahmen oder dergleichen sein.

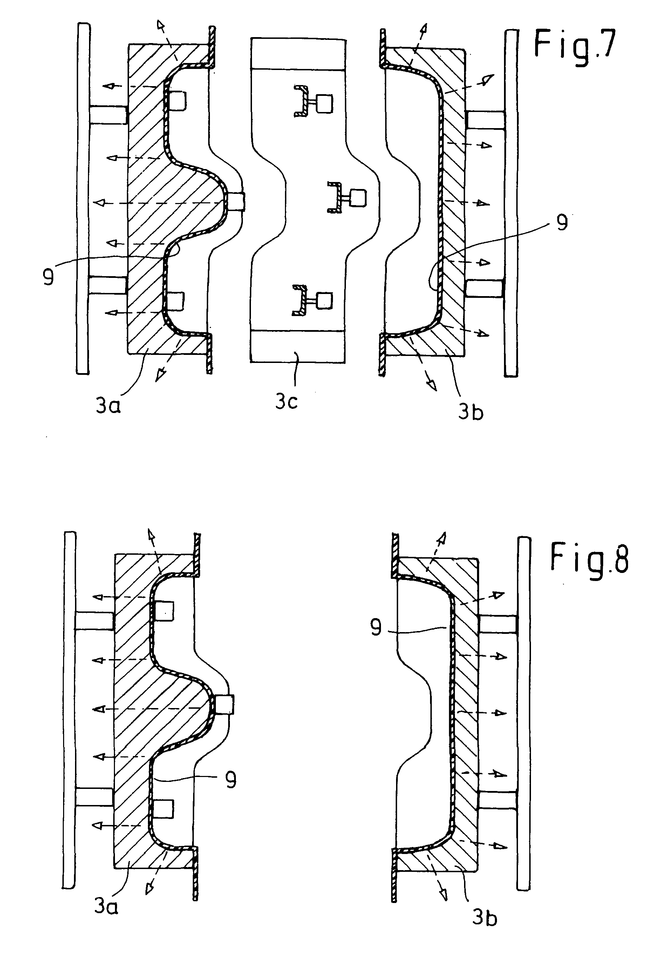

Nach Anlegen und Ausformen der Vorformlinge 6 an die Innenwandung der jeweiligen Kavität 4a, 4b werden die Außenformen 3a, 3b in X-Richtung auseinandergefahren, die Mittelform 3c wird in Z-Richtung zwischen den Außenformen 3a, 3b herausgefahren, sodass der in Figur 8 dargestellte Zustand erreicht ist. Sodann werden die Außenformen 3a, 3b in X-Richtung gegeneinander geschlossen, sodass die flanschartig ausgebildeten Ränder 8 des jeweiligen Zwischenerzeugnisses 9 miteinander verschweißt werden. Die Außenformen 3a, 3b werden sodann geöffnet, das Erzeugnis 5 kann entnommen werden.

Das Verfahren gemäß der Erfindung sieht nun vor, dass die Wanddicke eines jeden Vorformlings 6 nach einem vorgegebenen Programm variiert wird, d. h., dass dem jeweiligen Vorformling 6 ein Dickenprofil sowohl in Y-Richtung als auch in Z-Richtung aufgegeben wird. Die Extrusion der Vorformlinge 6 aus dem jeweiligen Extrusionskopf 2 erfolgt synchron, wobei zeitabhängig (bezogen auf die Zykluszeit bzw. Extrusionszeit) entweder einem oder auch bei den Vorformlingen ein Wanddickenprofil aufgegeben wird. Dabei sind die Wanddickeprofile der Vorformlinge 6 unabhängig voneinander steuerbar, sodass beispielsweise ein Artikel erhalten werden kann, der beispielsweise an einer Seite dicker als an der anderen Seite ist, ohne dass hierbei die Extrusion der einen Seite durch die Wanddickenvariation der anderen Seite beeinflusst wird.

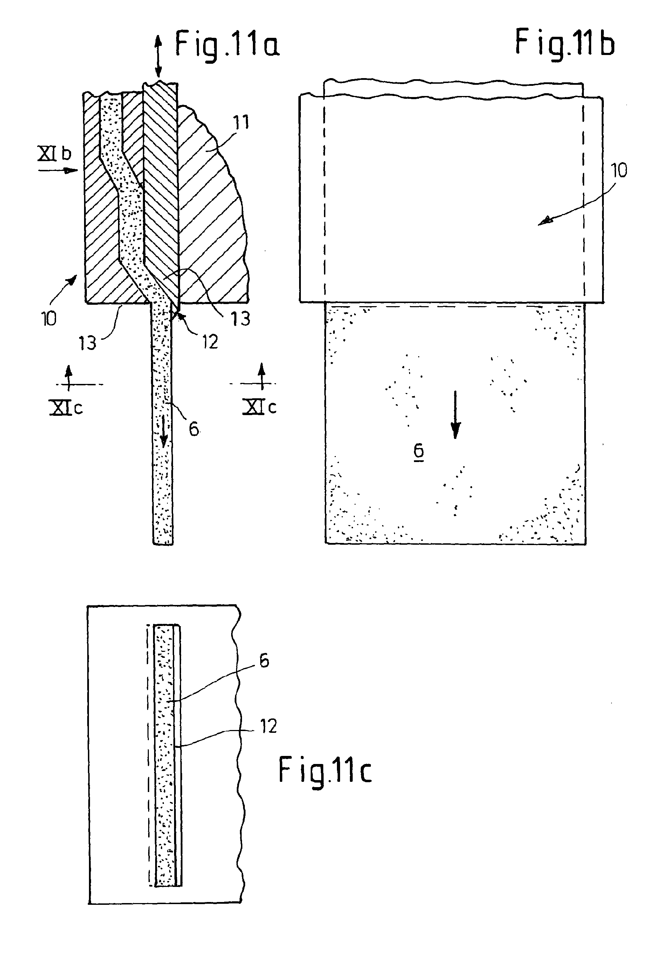

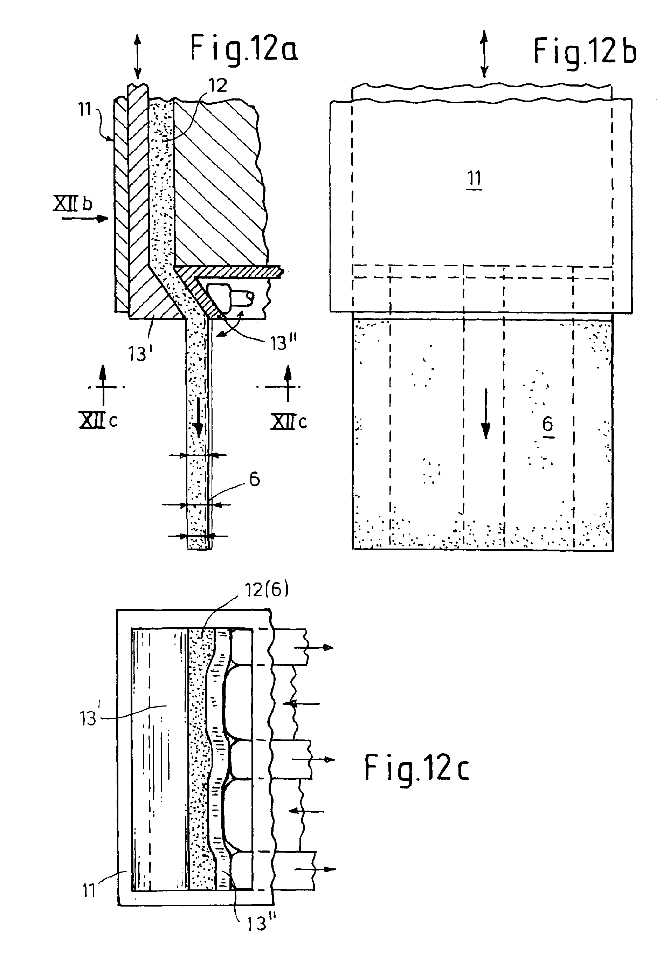

Mögliche Ausbildungen der Düse 10 der Extrusionsköpfe 2 sind jeweils in den Figuren 11a und 12a dargestellt. Diese zeigen einen Schnitt durch den Düsenbereich, der jeweils als Breitschlitzdüse ausgebildeten Düse. Die Düse 10 besitzt einen Düsenkörper 11 mit im Falle des in den Figuren 11a bis 11 c gezeigten Ausführungsbeispiels zwei einen Düsenspalt 12 begrenzenden Werkzeuglippen 13.

Eine Verstellung eine der Werkzeuglippen 13 in Extrusionsrichtung, d. h. in Y-Richtung, bewirkt eine Verengung oder Erweiterung des Düsenspalts 12 und damit eine Veränderung der Wanddicke des betreffenden Vorformlings 6. Die Figuren 11a und 12a zeigen jeweils einen Schnitt an einer Stelle des Düsenkörpers 11. Es ist für den Fachmann nachvollziehbar, dass der Düsenkörper 11 in Z-Richtung abschnittsweise verstellbar ist, sodass eine abschnittsweise Verstellung des Düsenspaltes 12 möglich ist, wodurch eine Variation der Wanddicke des Vorformlings 6 jeweils in Y- und in Z-Richtung erzielt wird. Diese abschnittsweise Verstellung des Düsenspalts 12 kann beispielsweise durch eine entsprechend nachgiebige Ausbildung der Werkzeuglippen 13 bewerkstelligt werden, auf die im Falle der Figuren 11a bis 11c nicht dargestellte Stellelemente einwirken.

Eine alternative Ausgestaltung des Düsenkörpers ist in den Figuren 12a bis 12c dargestellt, bei der eine erste Werkzeuglippe 13' über die gesamte Tiefe des Düsenspalts 12, d. h. über die gesamte Breite des Vorformlings in Z-Richtung gleichmäßig verstellbar ist, wohingegen eine zweite Werkzeuglippe 13" als Gegenlippe ausgebildet ist, die abschnittsweise in Z-Richtung gegenläufig verformbar ist und somit die Verstellung des Düsenspalts 12 durch die Werkzeuglippe 13' überlagert.

Es sind verschiedene Variationen dieses Verstellmechanismus im Rahmen der Erfindung möglich.

### Bezugszeichenliste

- 1.: Extrusionsblasformmaschine
- 2.: Extrusionskopf
- 3.: Werkzeug
- 3a, 3b: Außenformen
- 3c: Mittelform
- 4a, 4b: Kavität
- 5: Erzeugnis
- 6: Vorformling
- 7: Formnest
- 8: Ränder
- 9: Zwischenerzeugnis
- 10: Düse
- 11: Düsenkörper
- 12: Düsenspalt
- 13: Werkzeuge
- 13': Werkzeuglippe
- 13": Gegenlippe

## Patentansprüche

1. Verfahren zur Herstellung von Hohlkörpern aus thermoplastischem Kunststoff durch Extrusionsblasformen, bei welchem eine Extrusion von wenigstens zwei bahnförmigen Vorformlingen aus plastifiziertem Kunststoff mittels mehrerer Extrusionseinrichtungen erfolgt, wobei die Vorformlinge in der ersten Hitze, d.h. in noch plastischen Zustand, innerhalb eines mehrteiligen, ein Formnest bildenden Werkzeugs gemeinsam zu einem Hohlkörper umgeformt werden, **dadurch gekennzeichnet, dass** wenigstens einem Vorformling während der Extrusion unabhängig von dem jeweils anderen Vorformling durch Düsenspaltverstellung während der Extrusion ein Wanddickenprofil aufgegeben wird.

2. Verfahren nach Anspruch 1, **dadurch gekennzeichnet, dass** die Wanddickensteuerung jeweils nach einem vorgegebenen Programm erfolgt.

3. Verfahren nach einem der Ansprüche 1 oder 2, **dadurch gekennzeichnet, dass** den Vorformlingen ein Wanddickenprofil in Extrusionsrichtung und/oder quer zur Extrusionsrichtung aufgegeben wird.

4. Verfahren nach einem der Ansprüche 1 bis 3, **dadurch gekennzeichnet, dass** die Vorformlinge innerhalb des Werkzeugs durch inneren Überdruck und/oder äußeren Unterdruck aufgeweitet werden.

5. Verfahren nach einem der Ansprüche 1 bis 4, **dadurch gekennzeichnet, dass** die Umformung innerhalb eines dreiteiligen Werkzeugs zweistufig erfolgt, wobei in einem ersten Schritt die Vorformlinge jeweils gegen eine einen Teil des Formnests bildenden Kontur mittels Überdruck und/oder Unterdruck angelegt und ausgeformt werden und in einem zweiten Schritt die jeweils Teile des Hohlkörpers bildenden Zwischenerzeugnisse miteinander zu dem fertigen Erzeugnis verbunden werden.

6. Verfahren nach einem der Ansprüche 1 bis 5, **dadurch gekennzeichnet, dass** die Vorformlinge aus parallel zueinander angeordneten Extrusionseinrichtungen mit Breitschlitzdüsen hängend, d.h. in Schwerkraftrichtung, extrudiert werden.

7. Verfahren nach einem der Ansprüche 1 bis 6, **dadurch gekennzeichnet, dass** die Extrusion der Vorformlinge hinsichtlich der Extrusionsgeschwindigkeit synchron erfolgt.

8. Verfahren nach einem der Ansprüche 1 bis 7, **dadurch gekennzeichnet, dass** die Variation der Wanddicke der Vorformlinge in Abhängigkeit des zeitlichen Verlaufs des Extrusionsvorgangs erfolgt.

9. Verfahren nach einem der Ansprüche 1 bis 8, **dadurch gekennzeichnet, dass** die Vorformlinge zwischen die geöffneten Teile des Werkzeugs extrudiert werden, das um die Vorformlinge geschlossen wird und unter den Extrusionseinrichtungen wegbewegt wird.

10. Verfahren nach einem der Ansprüche 1 bis 9, **dadurch gekennzeichnet, dass** die Vorformlinge jeweils zwischen einer Außenform und einer Mittelform extrudiert werden, dass anschließend die Außenformen gegen die Mittelform geschlossen werden, die Vorformlinge jeweils gegen die Innenkontur der Außenformen angelegt werden, die Mittelform zwischen den Außenformen entfernt wird und die Außenformen gegeneinander geschlossen werden, um in diesen befindliche Zwischenerzeugnisse miteinander zu verbinden.

## Claims

1. Method for manufacturing hollow bodies from thermoplastics material by way of extrusion blow-moulding, in which extrusion of at least two webshaped preforms of plasticized plastics material is performed by means of a plurality of extrusion installations, wherein the preforms within a multi-part tool which forms a mould cavity at the first heat, that is to say still in the plastic state, are collectively formed into a hollow body, **characterized in that** during extrusion at least one preform is imparted a wall-thickness profile independently of the in each case other preform by die gap adjustment during extrusion.

2. Method according to Claim 1, **characterized in that** wall-thickness control is in each case performed according to a predefined program.

3. Method according to one of Claims 1 and 2, **characterized in that** the preforms are imparted a wall-thickness profile in the direction of extrusion and/or transversely to the direction of extrusion.

4. Method according to one of Claims 1 to 3, **characterized in that** the preforms within the tool are widened by internal positive pressure and/or external negative pressure.

5. Method according to one of Claims 1 to 4, **characterized in that** forming is performed in a dual-stage manner within a tripartite tool, wherein in a first step the preforms are in each case by means of positive pressure and/or negative pressure brought to bear on a contour which forms part of the mould cavity and moulded, and in a second step the intermediate products which in each case form parts of the hollow body are interconnected to complete the finished product.

6. Method according to one of Claims 1 to 5, **characterized in that** the preforms are extruded in a suspended manner, that is to say in the direction of gravity, from extrusion installations with slot dies, which are disposed so as to be parallel with one another.

7. Method according to one of Claims 1 to 6, **characterized in that** extrusion of the preforms in terms of the extrusion speed is performed in a synchronous manner.

8. Method according to one of Claims 1 to 7, **characterized in that** variation of the wall thickness of the preforms is performed so as to depend on the temporal profile of the extrusion operation.

9. Method according to one of Claims 1 to 8, **characterized in that** the preforms are extruded between the opened parts of the tool which is closed around the preforms and is moved away from under the extrusion installations.

10. Method according to one of Claims 1 to 9, **characterized in that** the preforms are in each case extruded between an outer mould and a centre mould, **in that** subsequently the outer moulds are closed towards the centre mould, the preforms are in each case brought to bear on the inner contour of the outer moulds, the centre mould is removed from between the outer moulds, and the outer moulds are closed towards one another in order for the intermediate products which are located therebetween to be interconnected.

## Revendications

1. Procédé de fabrication de corps creux à partir de matière plastique thermoplastique par moulage par extrusion-soufflage, dans lequel on effectue une extrusion d'au moins deux ébauches de moulage en forme de bande en matière plastique plastifiée au moyen de plusieurs dispositifs d'extrusion, dans lequel on déforme les ébauches de moulage dans la première chaude, c'est-à-dire à l'état encore plastique, à l'intérieur d'un outil en plusieurs parties formant une cavité de moulage, en commun en un corps creux, **caractérisé en ce que** l'on impose à au moins une ébauche de moulage pendant l'extrusion un profil d'épaisseur de paroi, indépendamment de chaque autre ébauche de moulage, par ajustement de l'ouverture des buses.

2. Procédé selon la revendication 1, **caractérisé en ce que** l'on effectue la commande de l'épaisseur de paroi chaque fois suivant un programme prédéterminé.

3. Procédé selon une des revendications 1 ou 2, **caractérisé en ce que** l'on impose aux ébauches de moulage un profil d'épaisseur de paroi dans la direction d'extrusion et/ou transversalement à la direction d'extrusion.

4. Procédé selon l'une quelconque des revendications 1 à 3, **caractérisé en ce que** l'on élargit les ébauches de moulage à l'intérieur de l'outil par une surpression intérieure et/ou une dépression extérieure.

5. Procédé selon l'une quelconque des revendications 1 à 4, **caractérisé en ce que** l'on effectue la déformation en deux étapes à l'intérieur d'un outil en trois parties, dans lequel on applique et on façonne dans une première étape les ébauches de moulage respectivement contre un contour formant une partie de la cavité de moulage au moyen d'une surpression et/ou d'une dépression et on assemble dans une deuxième étape l'un à l'autre les produits intermédiaires formant respectivement des parties du corps creux en un produit fini.

6. Procédé selon l'une quelconque des revendications 1 à 5, **caractérisé en ce que** l'on extrude les ébauches de moulage hors de dispositifs d'extrusion disposés parallèlement l'un à l'autre avec des buses à fente large en position suspendue, c'est-à-dire dans la direction de la pesanteur.

7. Procédé selon l'une quelconque des revendications 1 à 6, **caractérisé en ce que** l'on effectue l'extrusion des ébauches de moulage de manière synchrone par rapport à la vitesse d'extrusion.

8. Procédé selon l'une quelconque des revendications 1 à 7, **caractérisé en ce que** l'on opère la variation de l'épaisseur de paroi des ébauches de moulage en fonction du déroulement temporel de l'opération d'extrusion.

9. Procédé selon l'une quelconque des revendications 1 à 8, **caractérisé en ce que** l'on extrude les ébauches de moulage entre les parties ouvertes de l'outil, que l'on referme autour des ébauches de moulage et que l'on déplace sous les dispositifs d'extrusion.

10. Procédé selon l'une quelconque des revendications 1 à 9, **caractérisé en ce que** l'on extrude les ébauches de moulage respectivement entre un moule extérieur et un moule central, **en ce que** l'on ferme ensuite les moules extérieurs contre le moule central, on applique les ébauches de moulage respectivement contre le contour intérieur des moules extérieurs, on enlève le moule central entre les moules extérieurs et on ferme les moules extérieurs l'un contre l'autre, afin d'assembler l'un à l'autre des produits intermédiaires se trouvant dans ceux-ci.
